Europäisches Patentamt

(19) European Patent Office

Office européen des brevets

(11) Publication number : **0 339 782 B1**

# EUROPEAN PATENT SPECIFICATION

(45) Date of publication of patent specification :
24.05.95 Bulletin 95/21

(51) Int. Cl.$^6$ : **G06F 13/36**, G06F 13/374

(21) Application number : **89302579.1**

(22) Date of filing : **16.03.89**

(54) Shared bus data processing systems.

(30) Priority : **28.04.88 JP 104471/88**

(43) Date of publication of application :
02.11.89 Bulletin 89/44

(45) Publication of the grant of the patent :
24.05.95 Bulletin 95/21

(84) Designated Contracting States :
DE FR GB

(56) References cited :
EP-A- 0 137 761
RESEARCH DISCLOSURE. no. 258, October
1985, HAVANT GB pages 501 - 503; NN:"True
Round Robin Arbitrator"
IBM TECHNICAL DISCLOSURE BULLETIN.
vol. 30, no. 2, July 1987, NEW YORK US
pages557 - 560; NN: "ROUND ROBIN CON-
TROL HARDWARE"

(73) Proprietor : **International Business Machines
Corporation
Old Orchard Road
Armonk, N.Y. 10504 (US)**

(72) Inventor : **Ohba, Nobuyuki
MatsuoCorpo 202,1-170 Sakato
Takatsu-ku
Kawasaki-shi Kanagawa-ken (JP)**

(74) Representative : **Burt, Roger James, Dr.
IBM United Kingdom Limited
Intellectual Property Department
Hursley Park
Winchester Hampshire SO21 2JN (GB)**

## Description

The present invention relates to shared bus data processing systems in which a plurality of potential bus masters are connected to the shared bus and provision is made to provide bus use priority to each bus master in a flexible and optimum manner, enabling the enhancement of bus use efficiency.

In a system in which a plurality of bus masters are connected by a shared bus, such as a multiprocessor system or a channel subsystem, a bus use request may be issued from more than one bus master at the same time. In that case, the bus use must be permitted by selecting one bus master according to the priority of each bus master. With respect to the priority assignment, the following two methods have so far been used.

### (1) Fixed priority method

Previously fixed priorities are set in each of the bus masters, and if a bus use request is issued simultaneously from more than one bus master, the bus use is granted to the bus master that has the highest priority. This method is the easiest one to provide, but it has a shortcoming in that the use efficiency of the bus will be decreased when there is a large number of bus masters. Also, a situation may occur in which bus masters of lower priorities cannot get a bus at all.

### (2) Round robin method

This is a method in which each of the bus masters is given a serial number and priority is determined according to its values. This serial number is changed according to the use of the bus to keep the bus use uniform. However, the bus master includes a type in which the data transfer speed is fixed as in a DMA (Direct Memory Access) controller and the waiting time after issuing a bus use request is limited (for example, if reading-out of data from a disk is carried out by the DMA transfer, the bus use permission must be received and the transfer must be completed within a prescribed time after sending out the bus request), and a type in which the transfer speed and period will change as in a CPU (Central Processing Unit). Even if a single bus master of the type for which the time till the transfer completion is limited, such as a DMA controller is included, this method cannot be used.

As an example of a bus system using the above fixed priority method, MULTIBUS II (a trademark) of the Intel Corporation is cited. Further, Motorola's MC68452 can select and use either the fixed priority method or the round robin method. However, it cannot use both methods simultaneously.

Incidentally, the following patent references are pertinent. Published Unexamined Patent Application (PUPA) No. 62-9454 official gazette: In a system in which the bus arbitration function is distributed among the bus masters, the fixed priority method is implemented by providing each bus master with a register for holding a priority. PUPA No. 62-187955 official gazette: In a similar system, the round robin method is implemented by providing a counter.

However, the prior art discloses nothing which appears to provide the potential for selectively obtaining the advantages of both the found robin method and the fixed priority method.

Accordingly, the present invention provides a shared bus data processing system in which a plurality of potential bus masters can contend for time slot ownership on the shared bus on a priority basis, wherein a pair of boundary values can be selected separately for each bus master and the current priority of each bus master is the value of a counter in the bus master, the counter counting in synchronism with the available time slots, the counter value being compared to a first boundary value in each bus master during each time slot, and if that master is contending and the counter value, equals the first boundary value, the counter is set to the second boundary value.

In one form of data processing system according to the present invention and disclosed hereinafter, each bus master holds a priority code representing the bus use priority which is currently assigned to it, and it outputs that code to a bus arbitration circuit when requesting the bus. The bus arbitration circuit may be one that collectively performs the arbitration as a dedicated unit, or may be one that is distributed and held among the respective bus masters. In the present invention, each bus master has a highest priority register indicating the highest priority which it can possess, a lowest priority register indicating the lowest priority, and a request priority counter indicating the priority which it is currently provided with. And the counter is either incremented or decremented for each bus arbitration sequence. In a construction in which the request priority in the counter approaches the highest priority by incrementing or decrementing, the request priority is compared with the lowest priority and, when the two are equal to the lowest priority in the lowest priority register is transferred to the counter. Conversely, in a construction in which the request priority approaches the lowest priority, the request priority is compared with the lowest priority and, when the two are equal, the highest priority in the highest priority register is transferred to the counter.

In such an arrangement, the highest priority, the lowest priority and the contents of each bus master can arbitrarily be established, and the bus arbitration can be conducted in various manners according to how they are chosen. For example, the fixed priority method can be implemented by, setting both the highest priority and the lowest priority of each bus master to be fixed priority provided to that bus master. Also, the round robin method can be implemented by setting the same highest priority and the same lowest priority in each bus master, and if the difference between the highest priority is made larger than the lowest priority by a number equal to the number of bus masters, and if each of the initial values in the counters of the respective bus masters is different. It is also possible that the fixed priority method may be used for part of the bus masters with the remaining bus masters using the round robin method.

The present invention will be described further by way of example with reference to an embodiment thereof as illustrated in the accompanying drawings, in which:

Fig. 1 is a block diagram showing the essential portions of an embodiment of the present invention;

Fig. 2 is a block diagram showing the overall configuration of the above-mentioned embodiment;

Figs. 3 to 6 are illustrations for explaining the operation of the above-mentioned embodiment;

Fig. 7 is a block diagram showing in more detail the essential portions of the above-mentioned embodiment; and

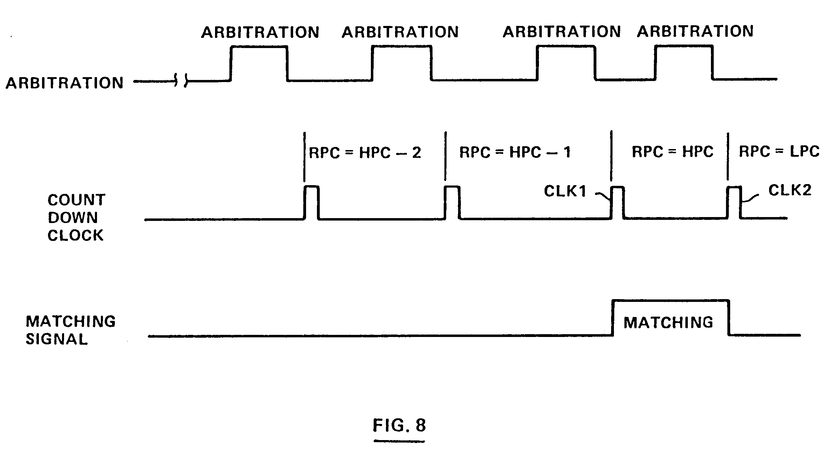

Fig. 8 is a time chart for explaining Fig. 7.

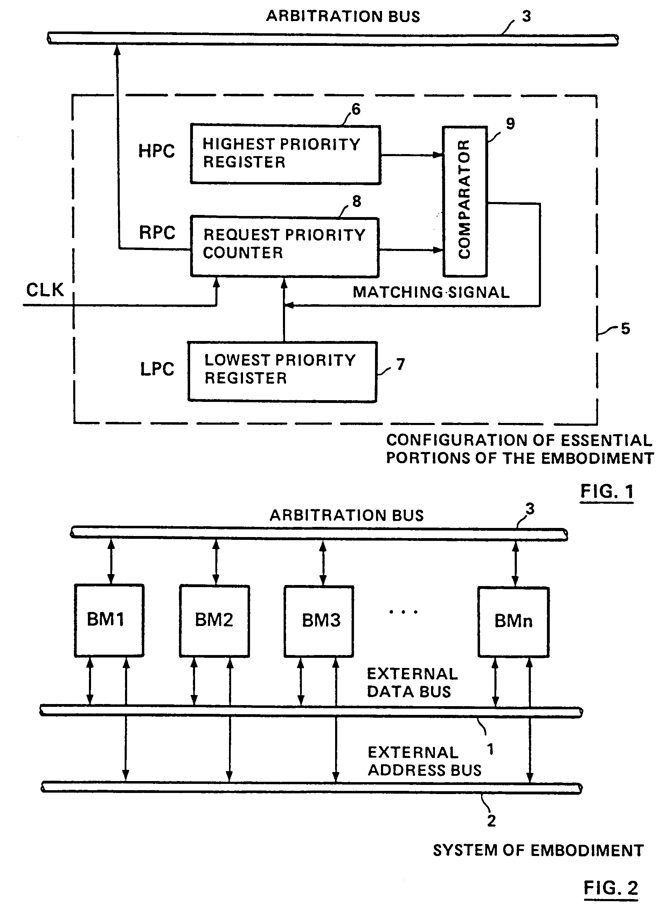

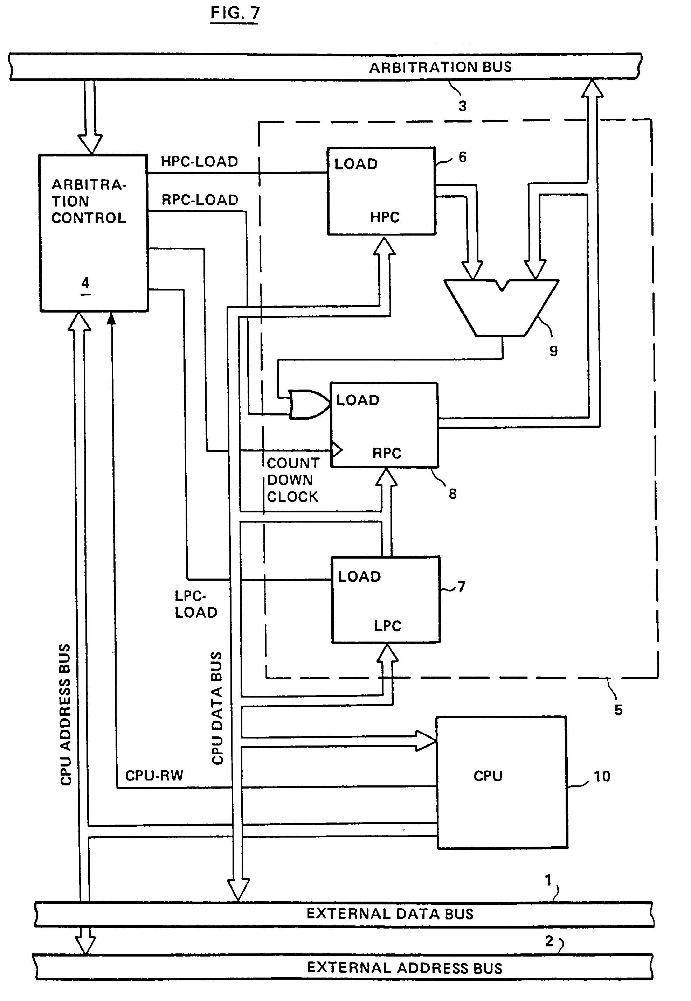

Fig. 2 shows as a whole an embodiment of the present invention, and in this figure, n bus masters BM1 to BMn - potential, since only one at a time can be an actual bus master, but the term is dropped hereinafter in the description for simplicity - are connected to a shared bus system. The shared bus system has an external data bus 1, an external address bus 2 and an arbitration bus 3. Each bus master BM1 to BMn, holds a priority code representing the bus use right it is currently provided with, and outputs that code to the arbitration bus 3 when using the bus system. Each bus master, BM1 to BMn is provided with an arbitration control circuit (designated by 4 in Fig. 7) for distributive control of the bus system. That is, when each bus master BM1 to BMn takes part in the bus arbitration by outputting the priority code, it uses the bus system when the request priority larger than its own priority code.

Fig. 1 shows the request priority determination circuit 5 of the bus master BM1. The other bus masters, BM2 to BMn also have a similar request priority determination circuit 5. In Fig. 1, the priority determination circuit 5 comprises a highest priority register 6, a lowest priority register 7, a request priority counter 8 and a comparator 9. In the highest priority register 6, a priority code HPC representing the highest priority that the bus master BM1 can take is stored, and in the lowest priority register 7, a priority code LPC representing the lowest priority that the bus master BM1 can take is stored. Incidentally, in the bus arbitration of this embodiment, the priority becomes higher as the priority code decreases.

Also, a clock CLK is inputted to the request priority counter 8, which counts down in response to this clock CLK. One clock CLK is generated when a bus master acquires the use of the bus and starts to use the bus. The contents of the request priority counter 8 are supplied as a priority code RPC of the request priority to the arbitration bus 3 and the comparator 9. The comparator 9 compares the priority code RPC of the request priority and the priority code HPC of the highest priority, and outputs a matching signal when they are equal. This matching signal is supplied to the counter 8, and based on this matching signal, the priority code LPC of the lowest priority of the lowest priority register 7 is transferred to the request priority counter 8 at the timing of the next clock CLK.

In such a configuration, the priority code RPC of the request priority is decremented by one each time the arbitration is completed, and returns to the priority code LPC of the lowest priority when it reaches the priority code HPC of the highest priority. This means that the request priority circulates between the highest priority and the lowest priority.

Now, the operation of this embodiment is described by giving examples.

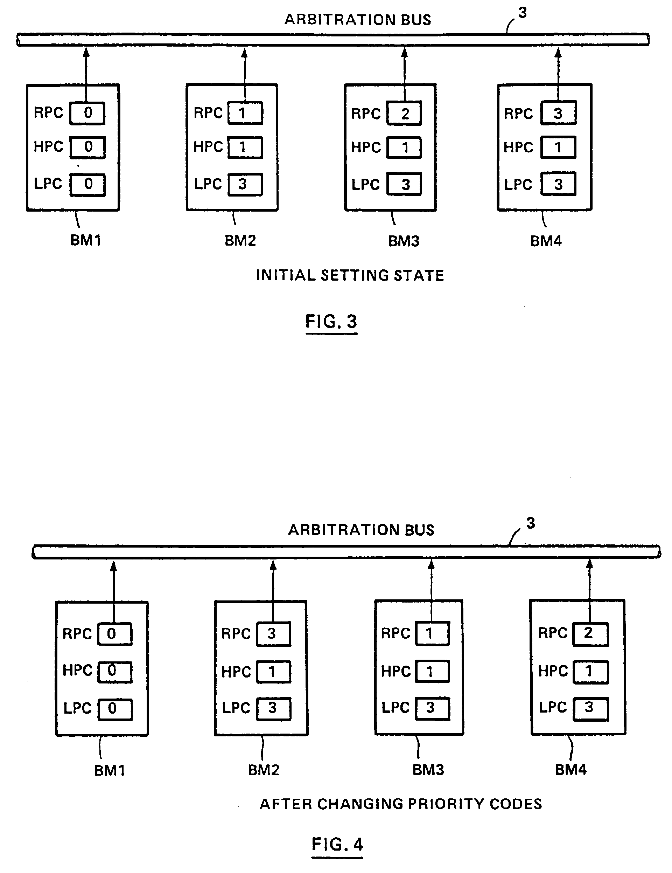

For simplicity, a system is considered wherein four bus masters BM1 to BM4 are connected to one bus. It is now desired to always give the highest priority (fixed priority code 0) to the bus master BM1 and to give priority (variable priority code 1, 2 and 3) to the remaining bus masters BM2, BM3 and BM4. In that case, the highest priority code HPC, the lowest priority code LPC and the request priority code RPC are established as shown in Fig. 3. That is, by setting "0" in the HPC, LPC and RPC, the bus master BM1 is made ready to issue a bus use request of a priority code 0 at any time. For the bus masters BM2, BM3 and BM4, the HPC is set to "1" and the LPC is set to "3", and the initial values are set so that the bus request priority code is either "1", "2" or "3" and a duplication of the RPC is avoided.

First, it is supposed that a bus use request has concurrently been issued from the bus masters BM2 and BM3. The bus master BM2 outputs its own current priority code 1 (the value of RPC) on the bus. On the other hand, the bus master BM3 also outputs its own current priority code 2. Since it has been arranged that the priority becomes higher as the priority code decreases, the bus master BM2 will acquire and use the bus. After that, the values of RPC in the bus masters BM1 to BM4 are as shown in Fig. 4.

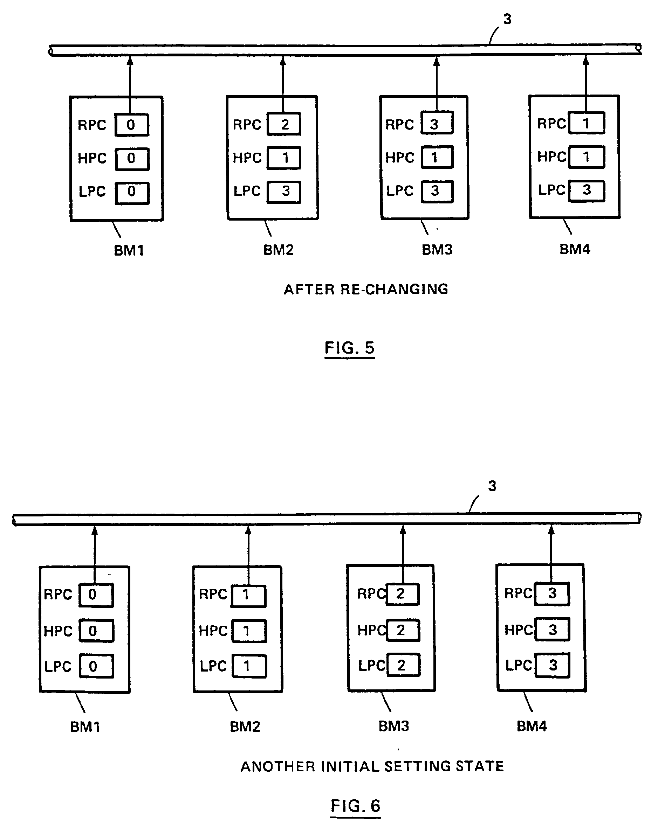

Then, it is supposed that a bus request has been issued again from the bus masters BM2 and BM3. Since, this time, the RPC of the bus master BM2 is "3" and the RPC of the bus master BM3 is "1", the bus master BM3 will acquire the bus. And the RPC of each bus master BM1 to BM4 changes after the arbitration and is set as shown in Fig. 5.

If, in the above example, the bus master BM1 also requested the bus, the bus master BM1 could always acquire the bus with the highest priority (priority code 0) because its RPC, HPC and LPC have been all set to "0". The changes with time of the RPC values in the bus masters BM1 to BM4 are shown in Table 1.

## Table 1  Changes of Priority Codes with Time

| Arbitration | Value of Priority Code (RPC) | | | |
| | Bus Master BM1 | Bus Master BM2 | Bus Master BM3 | Bus Master BM4 |
|---|---|---|---|---|
| 1st | 0 | 1 | 2 | 3 |
| 2nd | 0 | 3 | 1 | 2 |
| 3rd | 0 | 2 | 3 | 1 |
| 4th | 0 | 1 | 2 | 3 |
| . | . | . | . | . |
| . | . | . | . | . |
| . | . | . | . | . |

As another example, a case is considered in which the bus masters BM1 to BM4 are provided with fixed priorities (bus master BM1 > bus master BM2 > bus master BM3 > bus master BM4; however, the code magnitude is in the reverse order to this). In this case, as shown in Fig. 6, the HPC, LPC and RPC of the bus master BM1 are set to "0", those of the bus master BM2 to "1", those of the bus master BM3 to "2", and those of the bus masters BM4 to "3". With this, the respective bus masters BM1 to BM4 always output priority codes of "0", "1", "2", and "3".

In addition, in this embodiment, each bus master BM1 to BM4 may be used to rewrite the HPC, LPC and RPC during the system operation. Incidentally, in this example, the respective bus masters were made to have a distributed arbitration control function, but a configuration may also be used in which the arbitration control is collectively performed.

Fig. 7 shows the details of the request priority determination circui t 5 of the example in Fig. 1, along with an arbitration control circuit 4 and a CPU 10. In this figure, the portions corresponding to Fig. 1 are assigned the corresponding symbols, and the description thereof is omitted.

In Fig. 7, the respective signals are as follows:

HPC_LOAD: A signal for loading data on the CPU data bus to the highest priority register.

RPC_LOAD: A signal for loading data on the CPU data bus to the request priority counter.

LPC_LOAD: A signal for loading data on the CPU data bus to the lowest priority register.

Count_down_clock: A clock for changing the value of the request priority counter for each bus use. Similar to the CLK in Fig. 1.

CPU_RW: A signal for indicating the read-out or write-in of the CPU.

In this example, the desired data is transferred respectively to the highest priority register 6, the lowest priority register 7 and the request priority counter 8, based on the signals HPC_LOAD, LPC_LOAD and RPC_LOAD. After that, the RPC decreases for each arbitration sequence and, when the RPC equals the HPC, the RPC returns to the LPC. This is shown in Fig. 7. As apparent from this figure, in the case that a matching signal is only outputted from the comparator 9, data is not transferred to the request priority counter 8. If a matching signal is generated and the clock Count_down_clock is inputted to the counter 8, then data is transferred for the first time. By noting this point, it can be seen that the contents of the counter 8, or the request priority will change as follows. That is, if RPC=HPC at the clock CLK1, RPC=HPC is maintained also at the next arbitration time, and RPC=HPC is outputted to the arbitration bus 3 if taking part in the arbitration. At the clock CLK2, right after the completion of this arbitration, the LPC is transferred to the request priority counter 8. After this, the RPC is approaching the HPC in response to the subsequent arbitrations.

To summarise, this arrangement provides one form of shared bus data processing system in which a plurality of potential bus masters can contend for time slot ownership on the shared bus on a priority basis is disclosed, wherein the current priority of each master is determined by comparing a count, adjusted monotonically in synchronism with the available time slots, is compared with one of a pair of stored boundary values for that master and, if that master is contending, is the priority value for that master if the current count is found to lie within the comparison boundary value, else is deemed to be the other stored boundary value. The stored boundary values and the initial count for each potential bus master are all programmable whereby "round robin" priority is obtainable by setting the stored boundary difference equal to the number of potential bus masters in the round robin and the initial counts to lie within the boundary difference and to be representative of the position within the round robin priority order of the particular potential bus master to which relates and fixed priority is obtainable by setting the two stored boundary values for a potential bus master to be equal. Each potential bus master incorporates a first and a second boundary value register, a settable counter synchronised with the bus time slots, a comparator for comparing the contents of the first register with the contents of the counter, means for transferring the contents of the second register to the counter IFF the contents of the first register and the counter compare and means for transmitting the contents of the counter as the priority value for that potential bus master when contending. The bus time slot length is equal to one bus clock beat and the count adjustment period is synchronised to the bus clock.

It will be obvious to one skilled in the art that both the bus ownership arbitration and the current priority value generation can be centralised, as for example, into one, only, of the potential bus masters.

## Claims

1. A shared bus data processing system in which a plurality of potential bus masters (BM1 - BMn) can contend for time slot ownership on the shared bus on a priority basis, wherein a pair of boundary values can be selected separately for each bus master and the current priority of each bus master is the value of a counter (8) in the bus master, the counter counting in synchronism with the available time slots, the counter value being compared to a first boundary value in each bus master during each time slot, and if that master is contending and the counter value equals the first boundary value, the counter is set to the second boundary value.

2. A system as claimed in either preceding claim wherein the priority determination is centralised in one of the potential bus masters.

3. A system as claimed in claim 2 wherein each bus master incorporates a first and a second boundary value register (6, 7), a settable counter (8) synchronised with the bus time slots, a comparator (9) for comparing the contents of the first register (6) with the contents of the counter (8), means for transferring the contents of the second register to the counter if the contents of the first register and the counter compare and means for transmitting the contents of the counter as the priority value for that potential bus master when contending.

4. A system as claimed in any preceding claim wherein a bus arbitration circuit (4) for collectively receiving the priority values outputted from the contending bus masters to collectively arbitrate current ownership of the share bus is provided independently of the bus masters.

5. A system as claimed in any of claims 1 to 3 wherein each of the potential bus masters has a bus arbitration facility receiving priority values from all other contending potential bus masters for determining whether it can gain current ownership of the shared bus on the basis of the pre-eminence of its own priority value relative to the received priority values.

6. A system as claimed in any preceding claim wherein the bus time slot length is equal to one bus clock beat and the count adjustment period is synchronised to the bus clock.

7. A priority determination circuit for use in a system as claimed in any preceding claim in or for each potential bus master, the circuit comprising:

a first register (6) for storing a first priority code;

a second register (7) for storing a second priority code;

a counter (8) for receiving a predetermined number of count pulses;

comparing means (9) for comparing the content of the counter with the first priority code in the first register;

means for transferring the second priority code in the second register (7) to the counter (8) on the basis of the comparison result of the comparing means; and

means for outputting the contents of the counter as a coded representation of the priority value for that potential bus master, if contending.

**Patentansprüche**

1. Ein Datenverarbeitungssystem mit gemeinsamem Bus, in dem eine Vielzahl von potentiellen Busmastern (BM1 - BMn) um die Zeitschlitz-Besitzrechte an dem gemeinsamen Bus auf einer Prioritäts-Basis konkurrieren können, bei dem ein Grenzwert-Paar getrennt für jeden Busmaster ausgewählt werden kann, und die aktuelle Priorität jedes Busmasters der Wert eines Zählers (8) in dem Busmaster ist, wobei der Zähler synchron zu den verfügbaren Zeitschlitzen zählt, der Zählerwert während jedes Zeitschlitzes mit einem ersten Grenzwert in jedem Busmaster verglichen wird, und, wenn der Master konkurriert, und der Zählerwert dem ersten Grenzwert entspricht, der Zähler auf den zweiten Grenzwert gesetzt wird.

2. Ein System nach jedem vorangehenden Anspruch, bei dem die Bestimmung der Priorität zentral in einem der potentiellen Busmaster erfolgt.

3. Ein System nach Anspruch 2, bei dem jeder Busmaster über ein erstes und zweites Grenzwert-Register (6, 7) verfügt, einen einstellbaren Zähler (8), der mit den BusZeitschlitzen synchronisiert ist, einen Komparator (9) zum Vergleichen des Inhalts des ersten Registers (6) mit dem Inhalt des Zählers (8), Mittel zum Übertragen des Inhalts des zweiten Registers zum Zähler, wenn der Inhalt des ersten Registers und des Zählers gleichgestellt sind, und Mittel zum Übertragen des Zählerinhalts als Prioritäts-Wert für diesen potentiellen Busmaster, wenn dieser konkurriert.

4. Ein System nach jedem der vorangehenden Ansprüche, bei dem eine Buszuteilungsschaltung (4) für den kollektiven Empfang der von den konkurrierenden Busmastern ausgegebenen Prioritäts-Werte zur kollektiven Zuteilung der aktuellen Besitzrechte an dem gemeinsamen Bus unabhängig von den Busmastern bereitgestellt wird.

5. Ein System nach jedem der Ansprüche 1 bis 3, bei dem jeder potentielle Busmaster eine Buszuteilungseinrichtung hat, die Prioritäts-Werte von allen anderen konkurrierenden potentiellen Busmastern empfängt, um festzustellen, ob ihnen, aufgrund des Vorrangs ihres eigenen Prioritätswerts gegenüber den empfangenen Prioritätswerten, die aktuellen Besitzrechte an dem gemeinsamen Bus zugeteilt werden können.

6. Ein System nach jedem der vorangehenden Ansprüche, bei dem die Länge des Bus-Zeitschlitzes einem Bustakt entspricht und der Zählungs-Anpassungstakt mit dem Bustakt synchron ist.

7. Eine Schaltung zur Bestimmung der Priorität zur Verwendung in einem System nach jedem der vorangehenden Ansprüche, in jedem oder für jeden potentiellen Busmaster, wobei die Schaltung folgendes umfaßt:

ein erstes Register (6) zum Speichern eines ersten Prioritäts-Codes;

ein zweites Register (7) zum Speichern eines zweiten Prioritäts-Codes;

einen Zähler (8) für den Empfang einer vorbestimmten Zahl von Zählimpulsen;

Vergleichsmittel (9) zum Vergleichen des Zählerinhalts mit dem ersten Prioritäts-Code in dem ersten Register;

Mittel zum Übertragen des zweiten Prioritäts-Codes in dem zweiten Register (7) zum Zähler (8), auf der Basis des Vergleichsergebnisses des Vergleichsmittels; und

Mittel für die Ausgabe des Zählerinhalts als eine codierte Darstellung des Prioritäts-Werts für diesen potentiellen Busmaster im Konkurrenzbetrieb.

**Revendications**

1. Système de traitement de données à bus partagé dans lequel une pluralité de maître-bus potentiels (BM1-BMn) peuvent lutter pour la possession d'un intervalle de temps sur le bus partagé sur une base de priorité, une paire de valeurs limites pouvant être sélectionnées séparément pour chaque maître-bus et la priorité en cours de chaque maître-bus étant la valeur d'un compteur (8) dans le maître-bus, le compteur comptant en synchronisme avec les intervalles disponibles, la valeur du compteur étant comparée à une première valeur limite dans chaque maître-bus au cours de chaque intervalle de temps, et si ce maître est en lutte et que la valeur du compteur est égale à la première valeur limite, le compteur est établi à la seconde valeur limite.

2. Système selon la revendication précédente dans lequel la détermination de la priorité est centralisée dans l'un des maître-bus potentiels.

3. Système selon la revendication 2 dans lequel chaque maître-bus incorpore un premier et un second registres de valeurs limites (6, 7), un compteur réglable (8) est synchronisé avec les intervalles de temps, un comparateur (9) compare le contenu du premier registre (6) avec le contenu du compteur (8), des moyens pour transférer le contenu du second registre dans le compteur si le contenu du premier registre et du compteur sont comparables et des moyens pour transmettre le contenu du compteur sous la forme de la valeur de priorité pour ce maître-bus potentiel lors de la lutte.

4. Système selon l'une quelconque des revendications précédentes dans lequel un circuit (4) d'arbitrage de bus pour recevoir les valeurs de priorité délivrées par les maître-bus en lutte afin d'arbitrer collectivement la possession en cours du bus partagé, est utilisé indépendamment des maître-bus.

5. Système selon l'une quelconque des revendications 1 à 3 dans lequel chacun des maître-bus potentiels comporte une unité d'arbitrage recevant les valeurs de priorité en provenance de tous les autres maître-bus potentiels en lutte afin de déterminer s'il peut obtenir la possession en cours du bus partagé sur la base de la pré-éminence de sa propre valeur de priorité relative aux valeurs de priorité reçues.

6. Système selon l'une quelconque des revendications précédentes dans lequel la longueur de l'intervalle de temps du bus est égale à un battement d'horloge du bus et la période de réglage du compte est synchronisée avec l'horloge du bus.

7. Circuit de détermination de priorité destiné à être utilisé dans un système tel que revendiqué dans l'une quelconque des revendications précédentes dans ou pour chaque maître-bus potentiel, le circuit comprenant:
   un premier registre (6) pour stocker un premier code de priorité;
   un second registre (7) pour stocker un second code de priorité;
   un compteur (8) pour recevoir un nombre prédéterminé d'impulsions de comptage;
   des moyens de comparaison (9) pour comparer le contenu du compteur avec le premier code de priorité dans le premier registre;
   des moyens pour transférer le second code de priorité dans le second registre (7) au compteur (8) sur la base du résultat de comparaison du moyen de comparaison; et
   des moyens pour délivrer le contenu du compteur sous la forme d'une représentation codée de la valeur de priorité pour ce maître-bus potentiel, s'il est en lutte.

ARBITRATION BUS — 3

HPC — HIGHEST PRIORITY REGISTER — 6

COMPARATOR — 9

RPC — REQUEST PRIORITY COUNTER — 8

LPC — LOWEST PRIORITY REGISTER — 7

CLK

MATCHING SIGNAL

5

CONFIGURATION OF ESSENTIAL PORTIONS OF THE EMBODIMENT

**FIG. 1**

ARBITRATION BUS — 3

BM1  BM2  BM3  . . .  BMn

EXTERNAL DATA BUS

EXTERNAL ADDRESS BUS — 1

2

SYSTEM OF EMBODIMENT

**FIG. 2**

ARBITRATION BUS 3

| | RPC | 0 | | RPC | 1 | | RPC | 2 | | RPC | 3 |
|---|-----|---|---|-----|---|---|-----|---|---|-----|---|
| | HPC | 0 | | HPC | 1 | | HPC | 1 | | HPC | 1 |
| | LPC | 0 | | LPC | 3 | | LPC | 3 | | LPC | 3 |

BM1          BM2          BM3          BM4

INITIAL SETTING STATE

FIG. 3

ARBITRATION BUS 3

| | RPC | 0 | | RPC | 3 | | RPC | 1 | | RPC | 2 |
|---|-----|---|---|-----|---|---|-----|---|---|-----|---|
| | HPC | 0 | | HPC | 1 | | HPC | 1 | | HPC | 1 |
| | LPC | 0 | | LPC | 3 | | LPC | 3 | | LPC | 3 |

BM1          BM2          BM3          BM4

AFTER CHANGING PRIORITY CODES

FIG. 4

AFTER RE-CHANGING

FIG. 5

ANOTHER INITIAL SETTING STATE

FIG. 6

## FIG. 7

ARBITRATION     ARBITRATION      ARBITRATION     ARBITRATION

ARBITRATION

RPC = HPC − 2    RPC = HPC − 1    RPC = HPC    RPC = LPC

CLK1

CLK2

COUNT
DOWN
CLOCK

MATCHING
SIGNAL

MATCHING

FIG. 8

EP 0 339 782 B1